# EUROPEAN PATENT SPECIFICATION

(11) **EP 0 989 199 B1**
(45) Date of publication and mention of the grant of the patent: **03.04.2002**
(21) Application number: 99610048.3
(22) Date of filing: 30.08.1999
(51) Int. Cl.: C23C 4/18, A47J 36/02, B05D 5/08, C23C 28/00

(54) **A method for coating kitchen utensils**
Verfahren zum Beschichten von Küchengerätschaften
Procédé de revêtements d'articles culinaires

(30) Priority: 28.08.1998 DK 108798
(43) Date of publication of application: 29.03.2000
(73) Proprietor: Pyrolux A/S, 8550 Ryomgaard (DK)
(72) Inventor: Brund, Knud Hougaard, 8900 Randers (DK); Moeller, Bent, 8900 Randers (DK)
(74) Representative: Nielsen, Henrik Sten

(56) References cited:
- EP-A- 0 206 121
- GB-A- 2 111 861
- PATENT ABSTRACTS OF JAPAN vol. 009, no. 278 (C-312), 6 November 1985 (1985-11-06) & JP 60 125363 A (TETSUO HAYAKAWA), 4 July 1985 (1985-07-04)

## Description

The present invention relates to the manufacture of household articles, in particular kitchen utensils, by which method various layers of hard ceramic powder of one or more materials are applied to a core body, preferably a core body of aluminium, by means of plasma spraying whereupon an antiadhesion layer is applied to the ceramic layer or layers established of hard ceramic powder by plasma spraying in one or more steps.

In German patent publication DE 36 04 762 a technique is disclosed in the case of which a coating is made according to the method mentioned above. In the German patents DE 38 06 699 and DE 38 44 522, the corresponding European patents EP 0 331 155 and EP 0 523 761 as well as the corresponding Danish patents DK 171162 and DK 171058 further developments of the general combined plasma spraying and antiadhesion layer application technique are disclosed for instance described in the former German patent.

In accordance with the technique disclosed in DE 38 06 699 a layer building-up is carried out on the core body, as according to this patent publication a better adhesion of the antiadhesion layer should allegedly be obtainable by providing a pronouncedly porous surface of the ceramic structure, as a layer building-up of a steadily increasing grain size is made from the core body towards the surface, to which the antiadhesion layer is to be applied, in order to achieve exactly the pronouncedly porous structure.

In accordance with the technique disclosed in De 38 44 522, the adhesion of the antiadhesion layer to the porous structure of the ceramic structure is stated to be improved provided the ceramic structure presents a pronouncedly porous surface and the antiadhesion layer is applied in a two-step process in which a first step involves applying a highly fluid primer enamel for filling out the pores of the pronouncedly porous surface of the ceramic structure to a certain level and in which a non-stick enamel is thereupon in a second step applied for at least partly filling out the pores of the pronouncedly porous surface of the ceramic structure.

The applicant, a manufacturer of kitchen utensils and according to contractual agreements with PTG/Euroflamm, has long experience of manufacturing such kitchen utensils and has in this connection utilised the technique disclosed in the above German, European and Danish patent applications relating to the building-up of an increasing grain size from the core body and out-wards and the two-step application of a highly fluid baking or primer enamel and a non-stick enamel. Thus, the applicant has found that these techniques are not quite satisfactory as exactly the pronouncedly porous structure of the ceramic layer results in a relatively poor adhesion of the antiadhesion layer and forms pockets in the antiadhesion layer in which pockets material, typically fat, may accumulate which burns into the antiadhesion layer and consequently results in a discoloration of the antiadhesion layer and causes the formation of points or areas in which charred food scraps accumulate.

Thus, the applicant has, after having used a manufacturing technique by which a growing grain size structure was established according to the technique disclosed in the above Danish/German and European patents in combination with the two-step application of the highly viscous baking or primer enamel and the non-stick enamel, rejected this technique and has for some time used a uniform grain size during the plasma spraying and a one-step application of non-stick enamel. However, there has been a continuous wish for improving the plasma spraying technique and antiadhesion layer application technique in order to, firstly, establish a better adhesion of the antiadhesion layer to the ceramic layer, if possible, and, secondly, a more uniform surface of the antiadhesion layer without cavities in which, as described above, food scraps, particularly charred fat particles or other accumulations, may accumulate.

Thus, there is a need for achieving an improvement of the general technique for manufacturing kitchen utensils by spraying ceramic powder by means of plasma spraying and subsequently applying antiadhesion layers, in the case of which technique, on one hand, an improved adhesion of the antiadhesion layer to the ceramic layer is obtained and, on the other hand, a more smooth and more uniform, cavity free surface of the antiadhesion layer is achieved.

This need is met according to the teachings of the present invention by a method for coating a core body, preferably a core body of aluminium, in kitchen utensils, by which method one layer or various layers of hard ceramic powder of one or more materials are first applied by means of plasma spraying and in which an antiadhesion layer is applied to the ceramic layer or layers established of hard ceramic powder material by plasma spraying in one or more steps characterized in that on the latest applied ceramic layer which is established by means of a hard ceramic powder having an average grain size of between 5 and 20 µm, a pigment-containing primer enamel is applied containing between 5 and 20%, such as between 10 and 15%, preferably approximately 15% colour pigment by weight and furthermore between 5 and 20%, such as between10 and 15%, e.g. 15% antiadhesion pigments also by weight, whereas the remainder is constituted by bonding agent, and that after the appliance of the pigment containing primer enamel in a wet-wet appliance system, a pigment containing baking enamel is subsequently applied containing between 5 and 20%, such as between 10 and 15%, preferably approximately 10% colour pigment by weight and furthermore between 70 and 95%, such as between 75 and 85%, e.g. 80-85% antiadhesion pigments, also by weight, whereas the remainder is constituted by the bonding agent of the baking enamel.

Thus, in direct contravention of the technical teachings stated in the above Danish, German and European and patents, experience has shown that an improved adhesion of the antiadhesion layer to the ceramic layer and, furthermore, a more uniform and cavity free surface of the antiadhesion layer are achieved when the ceramic structure is established as a fine-grain ceramic layer for providing a close, uniform and smooth ceramic surface without actual cavities and the antiadhesion layer is applied in two-steps involving the application of a first layer differing from the primer enamel known from the above Danish, German and European patents in that the primer enamel includes a minor percentage of the colour pigments and further a minor percentage of non-stick or antiadhesion pigments whereas the top coat constituting the baking or stove enamel includes a large percentage of non-stick or antiadhesion pigments and a minor percentage of colour pigments.

It has, surprisingly, been realised that an improved adhesion of the antiadhesion layer as compared to a one-component and one-step application technique and further the two-step antiadhesion layer application technique involving a high fluid primer enamel and a non-stick enamel described in the above German, European and Danish patents is achieved in relation to a close, uniform and smooth ceramic surface exhibiting no cavities by applying in a first step a primer enamel including a low percentage colour pigment and non-stick or antiadhesion pigments and in a second stage applying a baking enamel including a high percentage of non-stick or antiadhesion pigments. It is submitted that the low percentage content of colour pigments and non-stick or antiadhesion pigments in the primer enamel provides a more uniform mixing of the various pigments during the hardening or baking process and presumably also a more uniform mixing of the various pigments in the wet-and-wet application phase. The above description is by no means to be construed limiting the technique according to the present invention, but is only to be considered a possible explanation of the technical effect achieved through the combination of a close, uniform and smooth ceramic surface and a two-step application of a non-stick layer involving applying a primer enamel including low percentages of colour and non-stick or antiadhesion pigments.

The technique of applying the adhesive layer in two steps may be carried out by applying the primer enamel in a single step and applying the baking enamel in one, two or several steps, however, preferably in a single step.

As pointed out above, the enamels applied in the two steps according to the method of the present invention may be applied in various quantities or volumes, however through experiments, it has been deduced that the volume of the pigment containing primer enamel applied in the first step preferably constitutes between 35 and 55%, such as between 40 and 45%, preferably e.g. 40% of the total volume of pigment containing primer enamel and pigment containing baking enamel.

Further, through experiments it has been deduced that a smooth, uniform and cavity free antiadhesive surface is established after the hardening or baking of the enamels providing the primer enamel is applied in one layer having in wet condition a thickness of 10-30 µm, such as between 15 and 25 µm, e.g. approximately 20 µm, whereas the pigment containing baking enamel is applied in one layer having a thickness of between 25 and 60 µm, such as between 30 and 50 µm, e.g. between 35 and 45 µm.

In accordance with the teachings of the present invention, the primer enamel and the baking enamel are preferably hardened in a two-step process comprising firstly an evaporation phase by heating to a temperature of 250°C and subsequently a burning at a higher temperature, such as a temperature of between 400 and 500°C, such as between 400 and 450°C, e.g. between 420 and 440°C during a period of between 5 and 15 minutes, such as between 5 and 10 minutes, e.g. approximately 10 minutes.

According to the basic realisation of the present invention, the surface of the ceramic structure exhibits a close, uniform and smooth ceramic surface for allowing the antiadhesive layer to adhere for providing a uniform, smooth and cavity free surface of the overall product. For achieving the close, uniform and smooth ceramic surface, the last applied ceramic layer is established by using a hard ceramic powder of a smaller average grain size compared with the other ceramic powder layers.

In accordance with the presently preferred embodiment of the method according to the present invention it is preferred that a building-up of a ceramic layer or a structure is made wherein the average grain size of the individually applied layers of hard ceramic powder decreases from the core body towards the antiadhesion layer, whereby exactly the provision of the uniform, close and cavity free surface of the ceramic structure is established as a result of a filling of possible cavities in the more coarse-grained ceramic layers by the later filling with the fine-grained ceramic powder.

In accordance with the technique described in the above-mentioned German patent DE 36 04 762 it is preferred that a priming of the core body is made during the plasma application by applying a nickel-containing adhesion primer layer as the first plasma application step.

In accordance with the basic realisation for the present invention that a filling of possible cavities is preferably to be made in the ceramic structure unlike the prior art in the case of which cavities are established, it is preferred that a layer of hard ceramic powder is established at the transition between the adhesion primer layer and the actual ceramic structure, which layer is applied to the nickel-containing adhesion layer containing a share of nickel powder. Thus, in this first applied hard ceramic powder layer a transition between the adhesion primer layer and the actual ceramic structure is established.

In accordance with the presently preferred embodiments of the method according to the present invention it is preferred that the adhesion primer layer has a thickness of 1-20 µm, preferably 1-10 µm, such as 5-10 µm, and that the individual ceramic layers have a thickness of 1-50 µm, such as 5-40 µm, preferably 5-20 µm.

The application of the ceramic powder layer is preferably carried out by using ceramic powders, wherein the average grain size of the finest used ceramic powders is between 5 and 20 µm and the size of the coarsest used ceramic powders is between 10 and 40 µm.

In accordance with the presently preferred embodiments of the method according to the present invention an arbitrary number of powder layers may be applied to an applied nickel-containing adhesion primer layer wherein the ceramic layer applied to the first applied, nickel-containing adhesion primer layer preferably contains a smaller share, such as less than 50%, for instance 10-40%, such as 20-30% nickel powder, as explained above. As ceramic powder chromium, titanium or other suitable, in principle inert metal powders or oxides thereof as well as alloys or mixtures of such materials may be used.

The present invention will be further described with reference to the drawing, in which
Fig. 1 shows a schematic and perspective view of a plant for plasma spraying of powder on kitchen utensils,
Fig. 2 shows a vertical section of a product manufactured according to the technique illustrated in Fig. 1,
Fig. 3 shows a product, in particular a frying pan, manufactured in accordance with the method according to the present invention,
Fig. 4 shows a schematic and perspective view of a plant for applying antiadhesion onto kitchen utensils,
Fig. 5 shows a vertical section of a product produced according to the present invention and utilising the plant illustrated in fig. 4, and
Fig. 6 is a schematic view illustrating a robot system for carrying out the method according to the present invention and implemented in the plant illustrated in Fig. 4.

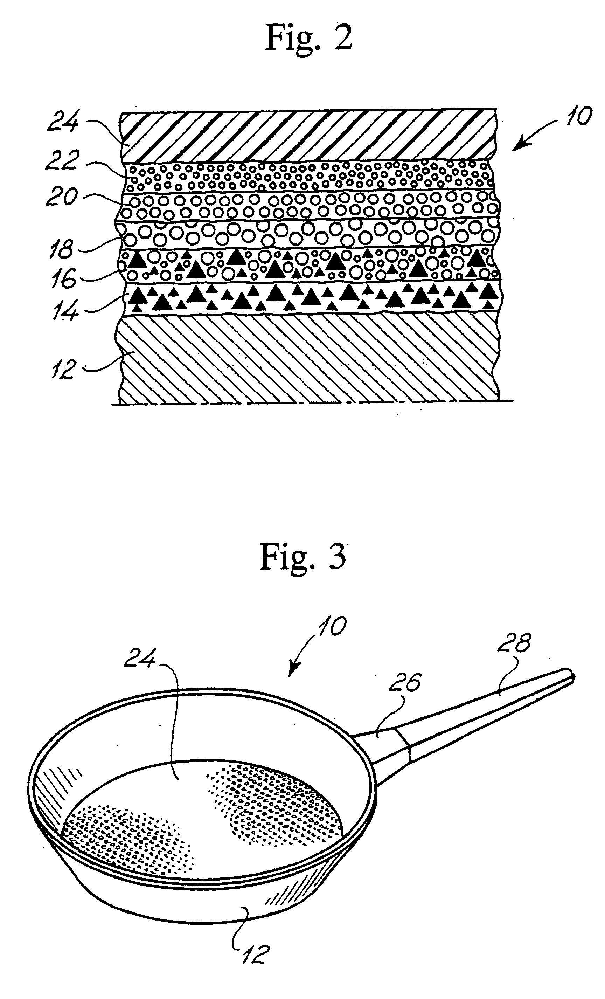

Fig. 3 shows an example of a kitchen utensil, or to be more explicit a frying pan, manufactured in accordance with the method according to the present invention, i.e. manufactured by means of a technique according to which a ceramic layer is first built up by means of plasma spraying and to which layer an antiadhesion layer, particularly a PTFE or Teflon®-containing slip layer, is subsequently applied. Thus, the frying pan comprises a core body in the form of a cast aluminium body 12 on which, as shown in Fig. 2, a layer structure is built up. Inside the frying pan 10 a slip layer 24 is applied in the form of a PTFE layer. Moreover, the frying pan 10 has a console 26 extending outwardly from the core body 12 and to which a handle 28, preferably a handle of an insulating material, such as a temperature resistant plastic material or bakelite, is mounted.

Fig. 2 shows as stated above a vertical section of the frying pan 10, shown in Fig. 3. The core body 12 is shown in the bottom and to this core body a first layer 14 is applied in the form of an adhesion primer layer which is built up of nickel powder of particles or grains of varying size, as shown symbolically in Fig. 2 with a signature comprising full-drawn triangles of varying size symbolising the nickel powder. To the layer 14 a layer of aluminium oxide is applied indicated with the signature of a circle mixed with a share of the same nickel powder of which the layer 14 is built up. Thus, the layer 16 comprises a varying particle size of aluminium oxide powder and a smaller share of nickel powder also of varying particle size. A layer of aluminium oxide powder of a relatively large particle size is applied to the layer 16, and a layer 20 of aluminium oxide powder of a smaller particle size compared with the layer 18 is applied to the layer 18. An aluminium oxide powder layer 22 of an even smaller particle size compared with the particles sizes used in the layers 18 and 20 is applied to the layer 20. The PTFE layer 24 is applied on top of the aluminium oxide powder 22.

It is to be pointed out in connection with the layer structure described above that the layer 16 could be omitted as exactly the provision of the titanium oxide layer 14 permits an adhesion of aluminium oxide powder to the core body 12. Alternatively, the layers 14 and 16 can be totally omitted which, however, according to the experience of the applicant causes a poorer adhesion of the aluminium oxide powder to the aluminium core body 12. Furthermore, fewer or more aluminium oxide powder layers than the three layers 18, 20 and 22 shown in Fig. 2 may be used, just as the layers may comprise a varying particle size. In any case, in accordance with the basic realisation for the present invention, a top layer is established by plasma technique which top layer is made from the smallest particles in order to establish the closest particle structure which, as experience has shown, results in the best adhesion of the slip layer 24, In addition to a varying number of aluminium oxide layers mixed powders in the form of powders of varying particle size may alternatively be used just as nickel powder of a varying particle size is used for the nickel primer layer shown in Fig. 2. According to the teachings of the present invention a particle size decreasing from the surface of the body towards the adhesion layer is used for establishing the closest and, thus, best adhering surface towards the adhesion layer.

It is to be pointed out that the above nickel powder for the adhesion primer layer may be composed of a mixture or an alloy of chromatium, nickel or nickel aluminium, as described in the above-mentioned German patent publication. Crucial for establishing the adhesion primer layer is, however, that a nickel-containing powder is used. The aluminium oxide particles described above may instead be composed of titanium oxide or alternatively a titanium aluminium oxide alloy or a mixture of aluminium oxide and titanium oxide. The above particles in the layers 14-22 typically have a grain size from 5-20 µm as a particle or a grain of a size, i.e. a diameter or a dimension equivalent thereto of 5 µm, is considered to be a small particle or a small grain, whereas a particle or a grain of a diameter or a dimension equivalent thereto of 20 µm is considered to be a large particle or a large grain. Normally, the individual layers 14, 16, 18, 20 and 22 do not contain just a single particle or grain layer, which also appears from the signature in Fig. 2, but will typically be built up of various individual layers lying above each other and, thus, have a thickness of between 10 µm and 60 µm, first of all dependent on the used particle or grain size.

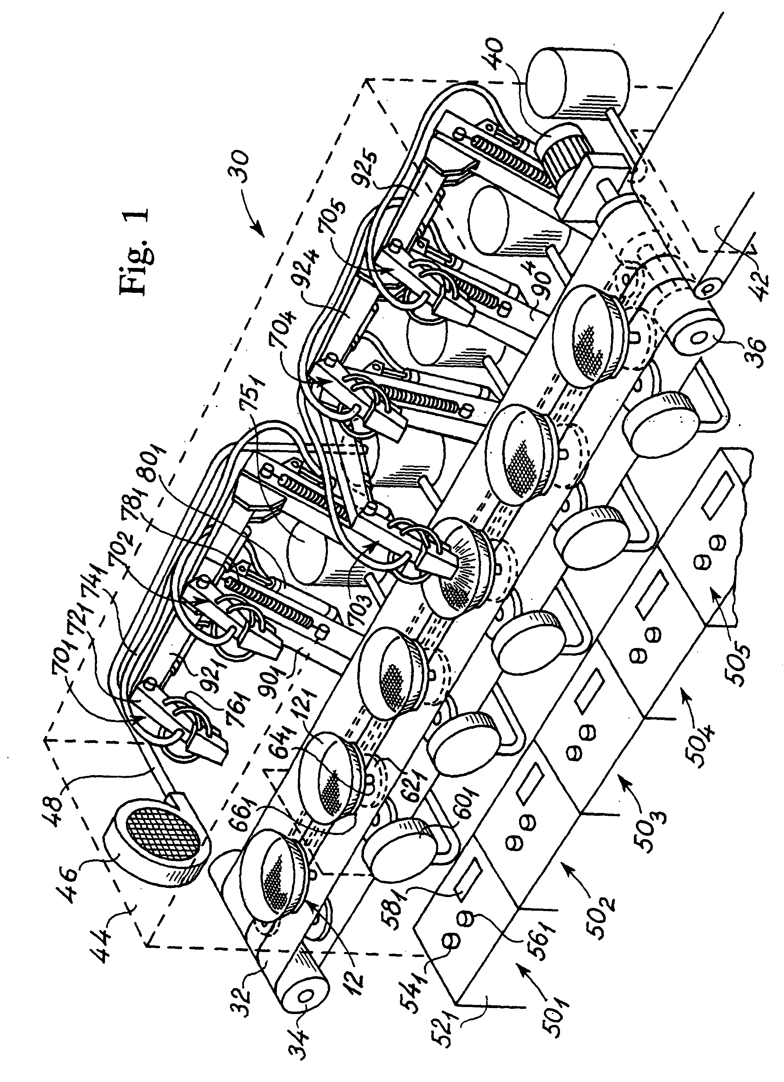

Fig. 1 shows in detail a schematic and perspective view of a plant for producing a layer divided ceramic structure to the surface of a core body, preferably an aluminium core body with an upper or outer ceramic layer implemented with a grain size as small as possible for providing the closest and, thus, best adhering surface compared with the later applied PTFE containing enamel. The plant in Fig. 1 is designated the reference numeral 30 and comprises a two-part assembly line 32 which is led round two rollers 34 and 36 of which the roller 36 is a driven roller driven by a motor 40. In the left side of the drawing a core body 12 is shown which is mounted on a rotary disc and is resting on the two-part assembly line 32. Thus, the piece 12 is led from the left to the right in the drawing by means of the assembly line 32 which may be moved intermittently or continuously or continuously with varying speed through five stations in all, which will be described in detail below.

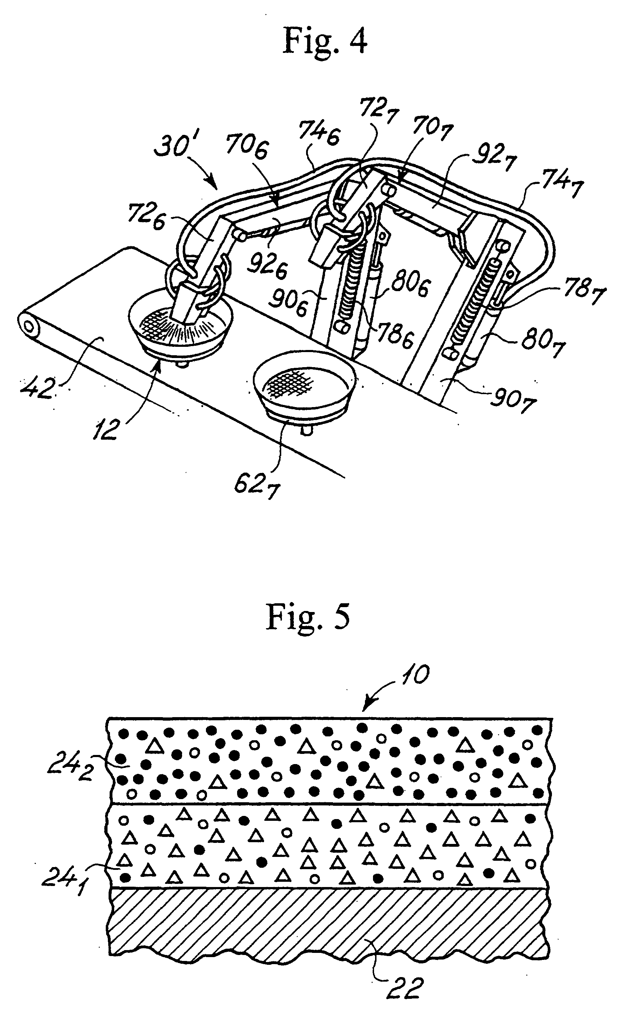

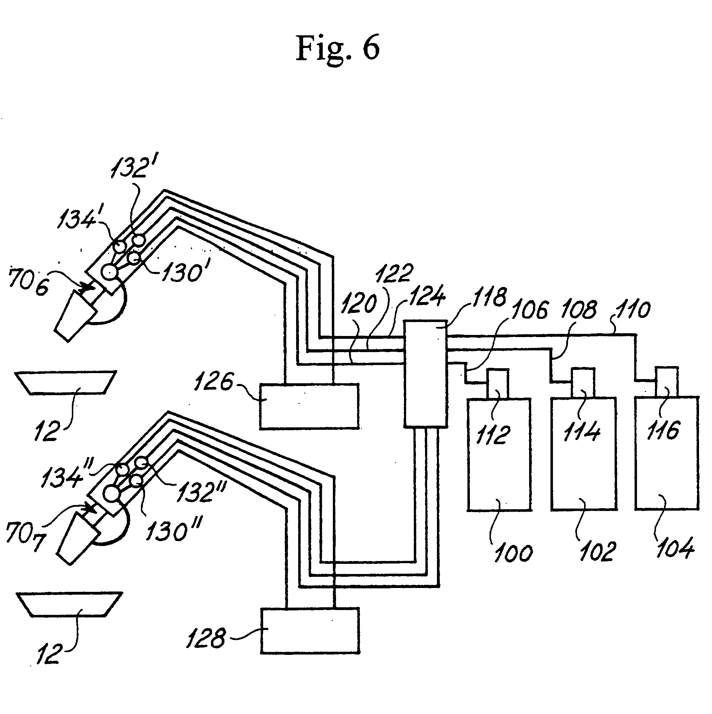

From the two-part assembly line 32 the plasma coated pan pieces are transferred to another assembly line 42 by means of which the plasma coated pieces are led to a PTFE application plant, which is in principle constructed in the same way as the plasma application robots shown in Fig. 1, and which is to be described below with reference to Figs. 5 and 6.

The plasma application to the individual pieces 12 is made in an enclosed chamber, in Fig. 1 shown schematically in dotted lines and designated the reference 44. From the chamber 44 ventilation is carried out by means of a ventilator 46 which is, furthermore, by a channel 48 connected with the individual plasma application stations, which will be described more detailed below. In Fig. 1 five individual robots belonging to five separate stations 50¹, 50², 50³, 50⁴, and 50⁵ are provided for establishing the five layers 14, 16, 18, 20 and 22 shown in Fig. 2, as in the first station the same index ¹ is used for all components, and correspondingly the same index, ², ³, ⁴ and ⁵ respectively, is used for the 2nd, the 3rd, the 4th and the 5th station. For all five stations the same two numbers are used for the same components or equivalent components as the affiliation of a component is indicated by the index belonging to the station number. Thus, the first station 50¹ has a control console 52¹ containing two control regulators 54¹ and 56¹ for adjusting the mixing ratio between the pow-ders which are mixed and applied in the station in question. The mixing ratio together with other relevant information, such as plasma application temperature, powder consumption etc. is shown on a display 58¹. In the first station 50¹ a rotary disc 62¹ is provided which may be coupled to a supporting disc 66¹ by means of a lifting device 64¹ on which disc the piece 12 is mounted. By activating the lifting device 64¹ the unworked piece 12 is, thus, lifted from the supporting mounting on the two-part assembly line 32 and is set rotating by means of the rotary disc 62¹. Opposite the piece 12 supported on the support 66¹ a plasma applying robot 70¹ is mounted comprising an arm 72¹ which can be moved towards the piece 12 by means of an hydraulic cylinder 80¹ as the reset of the robot arm to the position of the robot arm 72¹ shown in Fig. 1 is established by means of a spring 78¹. The arm 72¹ itself is mounted on another arm 92² and is supplied with plasma powder through a feed conduit 74¹. The arm 92² is pivotally mounted on a supporting console arm 90¹. The plasma application itself in the station 50¹ occurs after the robot arm 70¹ has been led down towards the piece 12 to a position corresponding to the position of the robot arm 70³ in the station 50³ whereupon by activating the plasma powder supply a release of plasma particles takes place during heating in an arc for applying the particles by plasma application to the piece 12. The various stations may work individually as regards application time, heating time, application quantity etc., but are synchronised so that the transfer of a not plasma applied piece to the first station 50¹, and correspondingly a shift from the first station to another station and so on, through the plant takes place simultaneously by means of the two-part assembly line.

As those skilled in the art will appreciate a larger or smaller number of robots and correspondingly a larger or smaller number of individual stations may be provided in the plant 30 shown in Fig. 1 for establishing a larger or smaller number of layers on the unworked piece, corresponding to the layers 14, 16, 18, 20 and 22 in Fig. 2. According to the teachings of the present invention it is, however, of decisive importance that exactly the upper, i.e. the last applied layer, the layer 22 shown in Fig. 2, is established with the smallest ceramic particles in order to establish a surface which is close and as even as possible and which is subsequently coated by means of robots for applying the antiadhesion layer prior to the burning of the antiadhesion layer.

In Fig. 4, a plant similar to the plant illustrated in Fig. 1 is shown for applying the antiadhesion layer to the individual pieces 12 processed in the plant illustrated in Fig. 1. In Fig. 4, two enamel-applying robots 70⁶ and 70⁷ are shown for applying a pigment containing primer enamel and a baking enamel, respectively, onto the piece 12 which is supported on a rotary disc and a support similar to the rotary disc and support illustrated in Fig. 1 and described above. The two enamel-applying robots 70⁶ and 70⁷ include components similar to the component described above with reference to Fig. 1 and included in the plasma-applying robots 70¹ - 70⁵. Thus, the enamel applying robots 70⁶ and 70⁷ each comprise a movable arm 72⁶ and 72⁷, respectively, a enamel feed conduit 74⁶ and 74⁷, respectively, a spring 78 and 78⁷, respectively, a hydraulic cylinder 80⁶ and 80⁷, respectively, a supporting console arm 90⁶ and 90⁷, respectively, and an arm 92⁶ and 92⁷.

By means of the robots 70⁶ and 70⁷ contained in the plant designated the reference numeral 30' in its entirety, the primer enamel and the baking enamel, respectively, is applied to the pieces 12 in a two-step process producing a structure illustrated in greater details in Fig. 5.

In Fig. 5, which constitutes an enlarged sectional view of the top surface of the frying pan 10, the top layer 22 of the plasma coated frying pan body is illustrated on top of which two layers 24¹ and 24² are applied. The layer 24¹ constitutes the primer layer including in triangular designation a binder of an amount of approximately 70%, colour pigments designated open circles in an amount of approximately 15% and further non-adhesive or PTFE pigments designated black circular signature in an amount of approximately 15%. Similarly, in the top layer 24² constituting the top coating of the antiadhesive layer, the binder is present in an amount of approximately 70%, the colour pigments are present in an amount of approximately 10% and the non-adhesion or PTFE pigments are present in an amount of approximately 85% designated the same signatures as in the layer 24¹. The view of Fig. 5 is to be considered a schematic view illustrating the presence of specific percentages of the three constituents binder, colour pigments and PTFE pigments and is by no means to be construed illustrated the actual wet-in-wet layers produced in the plant 30' illustrated in Fig. 4. It is contemplated that the spraying of the primer coating 24¹ provides the uniform distribution of colour pigments and PTFE pigments throughout the surface of the plasma coating and allows a homogeneous mixing with the colour pigments and the PTFE pigments of the baking enamel 24² applied in the second step in the wet-in-wet application system.

In Fig. 6, a schematic and diagrammatic view of the robot system illustrated in Fig. 4 is shown comprising three containers 100, 102 and 104 for containing the three constituents binder, colour pigments and PTFE pigments, respectively, which constituents are supplied through valves 112, 114 and 116, respectively, to supply lines 106, 108 and 110, respectively, and further to a distribution assembly 118 from which individual supply lines 120, 122 and 124, respectively, supply the three constituents to individual pumps 130', 134' and 132' of the robot 70⁶ and to pumps 130", 132" and 134" of the robot 70⁷. The controlling of the robots 70⁶ and 70⁷ is controlled by hydraulic control devices 126 and 128, respectively.

As the robotting system illustrated in Fig. 6 constitutes a robotting system of a type well known in the art per se, no further detailed description of the system is being presented here.

Further, as the technique of applying plasma coatings and also antiadhesion coatings onto cooking or kitchen utensils are well known in the art, no further detailed description is being presented in the present specification as reference is made to the above-mentioned Danish, German and European patents.

## Claims

1. Method for coating a core body, preferably a core body of aluminium, in kitchen utensils, by which method one layer or various layers of hard ceramic powder of one or more materials are first applied by means of plasma spraying and in which an antiadhesion layer is applied to the ceramic layer or layers established of hard ceramic powder material by plasma spraying in one or more steps **characterized in that** on the latest applied ceramic layer which is established by means of a hard ceramic powder having an average grain size of between 5 and 20 µm, a pigment containing primer enamel is applied containing between 5 and 20%, such as between 10 and 15%, preferably approximately 15% colour pigment by weight and furthermore between. 5 and 20%, such as between10 and 15%, e.g. 15% antiadhesion pigments also by weight, whereas the remainder is constituted by bonding agent, and that after the appliance of the pigment containing primer enamel in a wet-wet appliance system, a pigment containing baking enamel is subsequently applied containing between 5 and 20%, such as between 10 and 15%, preferably approximately 10% colour pigment by weight and furthermore between 70 and 95%, such as between 75 and 85%, e.g. 80-85% antiadhesion pigments, also by weight, whereas the remainder is constituted by the bonding agent of the baking enamel.

2. Method according to claim 1, **characterized in that** the pigment containing primer enamel is applied in one step whereas the pigment containing baking enamel is applied in one, two or several steps.

3. Method according to claim 1 or 2, **characterized in that** the volume of the pigment containing primer enamel applied in the first step constitutes between 35 and 55%, such as between 40 and 45%, preferably e.g. 40% of the total volume of pigment containing primer enamel and pigment containing baking enamel.

4. Method according to any of the claims 1-3, **characterized in that** the pigment containing primer enamel is applied in one layer having in wet condition a thickness of 10-30 µm, such as between 15 and 25 µm, e.g. approximately 20 µm, whereas the pigment containing baking enamel is applied in one layer having a thickness of between 25 and 60 µm, such as between 30 and 50 µm, e.g. between 35 and 45 µm.

5. Method according to any of the preceding claims, **characterized in that** the pigment containing primer enamel and the pigment containing baking enamel are hardened in a two-step process comprising firstly an evaporation phase at a heating of 250°C at a maximum and subsequently a burning at a higher temperature, such as a temperature of between 400 and 500°C, such as between 400 and 450°C, e.g. between 420 and 440°C during a period of between 5 and 15 minutes, such as between 5 and 10 minutes, e.g. approximately 10 minutes.

6. Method according to any of the preceding claims, **characterized in that** the last applied ceramic layer is established by using a hard ceramic powder of a smaller average grain size compared with the other ceramic powder layers.

7. Method according to any of the claims 1-6, **characterized in that** the average grain size of the individually applied layers of hard ceramic powder decreases from the core body towards the antiadhesion layer.

8. Method according to any of the claims 1-7, **characterized in that** a nickel-containing adhesion primer layer is applied as a first plasma application step.

9. Method according to claim 8, **characterized in that** the layer of hard ceramic powder which is applied to the nickel-containing adhesion primer layer contains a share of nickel powder.

10. Method according to claim 8 or claim 9, **characterized in that** the adhesion primer layer has a thickness of 1-20 µm, preferably 1-10 µm, such as 5-10 µm.

11. Method according to any of the claims 1-10, **characterized in that** the individual ceramic layers have a thickness of 1-50 µm, such as 5-40 µm, preferably 5-20 µm.

12. Method according to any of the claims 1-11 **characterized in that** the average grain size of the coarsest used ceramic powder is between 10 and 40 µm.

13. Method according to any of the claims 1-12, **characterized in that** a total of four ceramic powders is applied to an applied nickel-containing adhesion primer layer wherein the ceramic layer applied to the first applied, nickel-containing adhesion primer layer preferably contains a smaller share, such as less than 50%, for instance 10-40%, such as 20-30% nickel powder.

## Patentansprüche

1. Verfahren zur Beschichtung eines Kernkörpers, vorzugsweise eines Kernkörpers aus Aluminium, bei Küchengeräten, bei welchem Verfahren eine Schicht oder mehrere Schichten harten keramischen Pulvers aus einem oder mehr Materialien zunächst durch Plasmaspritzen aufgetragen werden, und wobei eine Antiadhäsionsschicht auf die aus hartem keramischen Pulvermaterial durch Plasmaspritzen in einer oder mehr Stufen etablierte keramische Schicht oder etablierten keramischen Schichten aufgetragen wird, **dadurch gekennzeichnet, dass** auf die durch ein hartes keramisches Pulver einer durchschnittlichen Größe von zwischen 5 und 20 µm etablierte, zuletzt aufgetragene keramische Schicht ein pigmenthaltiger Primerlack aufgetragen wird, der zwischen 5 und 20%, wie zum Beispiel zwischen 10 und 15%, vorzugsweise etwa 15% Farbpigment nach Gewicht und außerdem zwischen 5 und 20%, wie zum Beispiel zwischen 10 und 15%, z.B. 15% Antiadhäsionspigmente auch nach Gewicht enthält, während der Rest aus Bindemittel besteht, und dass nach dem Auftragen des pigmenthaltigen Primerlackes in einem Nass-Nass-Auftragssystem ein pigmenthaltiger Einbrennlack nachträglich aufgetragen wird, der zwischen 5 und 20%, wie zum Beispiel zwischen 10 und 15%, vorzugsweise etwa 10% Farbpigment nach Gewicht und außerdem zwischen 70 und 95%, wie zum Beispiel zwischen 75 und 85%, z.B. 80-85% Antiadhäsionspigmente auch nach Gewicht enthält, während der Rest aus dem Bindemittel des Einbrennlackes besteht.

2. Verfahren nach Anspruch 1, **dadurch gekennzeichnet, dass** der pigmenthaltige Primerlack in einer Stufe aufgetragen wird, während der pigmenthaltige Einbrennlack in einer, zwei oder mehr Stufen aufgetragen wird.

3. Verfahren nach Anspruch 1 oder 2, **dadurch gekennzeichnet, dass** das Volumen des in der ersten Stufe aufgetragenen pigmenthaltigen Primerlackes zwischen 35 und 55%, wie zum Beispiel zwischen 40 und 45%, vorzugsweise z.B. 40% des Gesamtvolumens pigmenthaltigen Primerlackes und pigmenthaltigen Einbrennlackes ausmacht.

4. Verfahren nach einem der Ansprüche 1-3, **dadurch gekennzeichnet, dass** der pigmenthaltige Primerlack in einer Schicht aufgetragen wird, die in nassem Zustand eine Dicke von 10-30 µm, wie zum Beispiel zwischen 15 und 25 µm, z.B. etwa 20 µm hat, während der pigmenthaltige Einbrennlack in einer Schicht aufgetragen wird, die eine Dicke von zwischen 25 und 60 µm, wie zum Beispiel zwischen 30 und 50 µm, z.B. zwischen 35 und 45 µm hat.

5. Verfahren nach einem der vorstehenden Ansprüche, **dadurch gekennzeichnet, dass** der pigmenthaltige Primerlack und der pigmenthaltige Einbrennlack in einem zweistufigen Verfahren gehärtet werden, umfassend zunächst eine Verdampfungsphase bei einer Erhitzung von maximal 250°C und danach ein Brennen bei einer höheren Temperatur, wie zum Beispiel einer Temperatur von zwischen 400 und 500°C, wie zum Beispiel zwischen 400 und 450°C, z.B. zwischen 420 und 440°C während eines Zeitraums von zwischen 5 und 15 Minuten, wie zum Beispiel zwischen 5 und 10 Minuten, z.B. etwa 10 Minuten.

6. Verfahren nach einem der vorstehenden Ansprüche, **dadurch gekennzeichnet, dass** die zuletzt aufgetragene Keramikschicht durch Einsatz eines harten keramischen Pulvers einer kleineren durchschnittlichen Körngröße gegenüber den anderen keramischen Pulverschichten etabliert wird.

7. Verfahren nach einem der Ansprüche 1-6, **dadurch gekennzeichnet, dass** die durchschnittliche Korngröße der individuell aufgetragenen Schichten harten keramischen Pulvers von dem Kernkörper in Richtung der Antiadhäsionsschicht abnimmt.

8. Verfahren nach einem der Ansprüche 1-7, **dadurch gekennzeichnet, dass** eine nickelhaltige Adhäsionsprimerschicht als eine erste Plasmaauftragsstufe aufgetragen wird.

9. Verfahren nach Anspruch 8, **dadurch gekennzeichnet, dass** die Schicht harten keramischen Pulvers, die auf die nickelhaltige Adhäsionsprimerschicht aufgetragen wird, einen Anteil Nickelpulver enthält.

10. Verfahren nach Anspruch 8 oder 9, **dadurch gekennzeichnet, dass** die Adhäsionsprimerschicht eine Dicke von 1-20 µm, vorzugsweise 1-10 µm, wie zum Beispiel 5-10 µm hat.

11. Verfahren nach einem der Ansprüche 1-10, **dadurch gekennzeichnet, dass** die einzelnen keramischen Schichten eine Dicke von 1-50 µm, wie zum Beispiel 5-40 µm, vorzugsweise 5-20 µm haben.

12. Verfahren nach einem der Ansprüche 1-11, **dadurch gekennzeichnet, dass** die durchschnittliche Korngröße des gröbsten eingesetzten keramischen Pulvers zwischen 10 und 40 µm beträgt.

13. Verfahren nach einem der Ansprüche 1-12, **dadurch gekennzeichnet, dass** insgesamt vier keramische Pulver auf eine aufgetragene nickelhaltige Adhäsionsprimerschicht aufgetragen werden, wobei die auf die zuerst aufgetragene, nickelhaltige Adhäsionsprimerschicht aufgetragene keramische Schicht vorzugsweise einen kleineren Anteil, wie zum Beispiel weniger als 50%, zum Beispiel 10-40%, wie zum Beispiel 20-30% Nickelpulver enthält.

## Revendications

1. Méthode pour enduire un corps de noyau, de préférence un corps de noyau en aluminium, dans des ustensiles de cuisine, par quelle méthode une ou plusieurs couches de poudre de céramique dure d'un ou plusieurs matériaux sont d'abord appliquées par moyens d'aspersion de plasma et que sur la couche céramique ou les couches céramiques établies de matériau en poudre de céramique dure par moyens d'aspersion de plasma, une couche anti-adhésive est appliquée en une ou plusieures étapes, **caractérisé en ce que** sur la couche de céramique appliquée en dernier, qui a été établie par moyens d'une poudre de céramique dure ayant une dimension moyenne de grains situées entre 5 et 20 µm, un pigment contenant de l'émail d'amorce est appliqué contenant entre 5 et 20%, tel qu'entre 10 et 15%, de préférence approximativement 15% de pigment couleur au poids et en outre entre 5 et 20%, tel qu'entre 10 et 15%, par exemple 15% de pigments anti-adhésifs, également au poids, alors que le reste est constitué par un adhésif, et qu'après l'application du pigment contenant de l'émail d'amorce dans un système d'application humide-sur-humide, un pigment contenant de l'émail au four est ensuite appliqué, contenant entre 5 et 20%, tel qu'entre 10 et 15%, de préférence approximativement 10% de pigment de couleur au poids et en outre entre 70 et 95%, tel qu'entre 75 et 85%, par exemple 80 à 85% de pigments anti-adhésifs, également au poids, alors que le reste est constitué par l'adhésif de l'émail au four.

2. Méthode selon la revendication 1, **caractérisée en ce que** le pigment contenant l'émail d'amorce est appliqué en une étape, alors que le pigment contenant l'émail au four est appliqué en une, deux ou plusieurs étapes.

3. Méthode selon la revendication 1 ou 2, **caractérisée en ce que** le volume du pigment contenant l'émail d'amorce appliqué dans la première étape, est constitué d'entre 35 et 55%, tel qu'entre 40 et 45%, de préférence par exemple 40% du volume total du pigment contenant de l'émail d'amorce et du pigment contenant de l'émail au four.

4. Méthode selon l'une quelconque des revendications 1 à 3, **caractérisée en ce que** le pigment contenant l'émail d'amorce est appliqué en une couche ayant, en état humide, une épaisseur de 10 à 30 µm, telle qu'entre 15 et 25 µm, par exemple approximativement 20 µm, alors que le pigment contenant l'émail au four est appliqué en une couche ayant une épaisseur entre 25 et 60 µm, telle qu'entre 30 et 50 µm, par exemple entre 35 et 45 µm.

5. Méthode selon l'une quelconque des revendications précédentes, **caractérisée en ce que** le pigment contenant l'émail d'amorce et le pigment contenant l'émail au four sont durcis par un procédé en deux étapes comprenant d'abord une phase d'évaporation par un chauffage à 250°C au maximum et ensuite un brûlement à une température plus élevée, telle qu'une température entre 400 et 500°C, par exemple entre 420 et 440°C pendant une période d'entre 5 et 15 minutes, telle qu'entre 5 et 10 minutes, par exemple approximativement 10 minutes.

6. Méthode selon l'une quelconque des revendications précédentes, **caractérisée en ce que** la dernière couche céramique appliquée est établie en utilisant une poudre de céramique dure aux grains ayant des dimensions moyennes inférieures comparées aux autres couches de poudre céramique.

7. Méthode selon l'une quelconque des revendications 1 à 6, **caractérisée en ce que** la dimension moyenne des grains des couches de poudre de céramique dure appliquées individuellement diminuent en allant du corps de noyau vers la couche anti-adhésive.

8. Méthode selon l'une quelconque des revendications 1 à 7, **caractérisée en ce qu'**une couche d'amorce d'adhésion nickélifère est appliquée comme première étape d'application de plasma.

9. Méthode selon la revendication 8, **caractérisée en ce que** la couche de poudre de céramique dure qui est appliquée à la couche d'amorce d'adhésion nickélifère contient une partie de poudre de nickel.

10. Méthode selon la revendication 8 ou 9, **caractérisée en ce que** couche d'amorce d'adhésion a une épaisseur de 1 à 20 µm, de préférence 1 à 10 µm, telle que 5 à 10 µm.

11. Méthode selon l'une quelconque des revendications 1 à 10, **caractérisée en ce que** les couches individuelles de céramiques ont une épaisseur de 1 à 50 µm, de préférence 5 à 20 µm.

12. Méthode selon l'une quelconque des revendications 1 à 11, **caractérisée en ce que** la dimension moyenne des grains de poudre céramique de la qualité la plus grosse est entre 10 et 40 µm.

13. Méthode selon l'une quelconque des revendications 1 à 12, **caractérisée en ce qu'**un total de quatres poudres de céramique sont appliquées à une couche d'amorce d'adhésion nickélifère appliquée dans laquelle la couche céramique appliquée à la première couche d'amorce d'adhésion nickélifère appliquée contient de préférence une partie moins importante, telle que moins de 50%, par exemple 10 à 40%, telle que 20 à 30% de poudre de nickel.
